# EUROPEAN PATENT APPLICATION

(11) **EP 4 306 991 A1**
(43) Date of publication of application: **17.01.2024**
(21) Application number: 22774092.5
(22) Date of filing: 15.03.2022
(51) Int. Cl.: G01S 7/41, G01S 7/02

(54) **INTERFERENCE DETECTION METHOD AND DEVICE**

(30) Priority: 24.03.2021 CN 202110314822
(71) Applicant: Huawei Technologies Co., Ltd., Longgang Shenzhen, Guangdong 518129 (CN)
(72) Inventor: XU, Leilei, Shenzhen, Guangdong 518129 (CN); QIN, Boya, Shenzhen, Guangdong 518129 (CN)
(74) Representative: Grünecker Patent- und Rechtsanwälte PartG mbB
(86) International application number: PCT/CN2022/081036
(87) International publication number: WO 2022/199431

(57) **Abstract**

This application provides an interference detection method and apparatus, and belongs to the field of radar technologies. The method includes: obtaining a digital signal obtained by processing a radar echo signal; processing the digital signal via at least two filters with different cut-off frequencies to obtain at least two filtered signals; and determining, based on each of the at least two filtered signals and an interference detection threshold corresponding to each filtered signal, whether an interference signal exists in the radar echo signal. In embodiments of this application, the at least two filters with different cut-off frequencies filter the digital signal, to separately perform interference detection on each filtered signal to implement interference detection on the radar echo signal. This improves interference detection precision. Further, the method improves an advanced driver assistance system ADAS capability of a terminal during autonomous driving or assisted driving, and may be applied to the Internet of vehicles, for example, vehicle-to-everything V2X, long term evolution-vehicle LTE-V, and vehicle-to-vehicle V2V.

## Description

This application claims priority to Chinese Patent Application No. 202110314822.7, filed with the China National Intellectual Property Administration on March 24, 2021 and entitled "INTERFERENCE DETECTION METHOD AND APPARATUS", which is incorporated herein by reference in its entirety.

### TECHNICAL FIELD

This application relates to the field of radar technologies, and in particular, to an interference detection method and apparatus.

### BACKGROUND

With the rapid development of social economy and the significant improvement of science and technology, people's quality of life has also been greatly improved. Intelligent terminals such as an intelligent transportation device, a smart home device, and a robot gradually enter people's daily life. In recent years, as a quantity of families owning vehicles increases year by year, vehicles have become one of the main means of transportation for people's daily travel. An advanced driver assistance system (advanced driver assistance system, ADAS) is a comprehensive system that integrates many high-tech technologies such as environment perception, decision-making and planning, motion control, platform execution, and human-computer interaction. The environment perception is a prerequisite for the ADAS to support intelligent driving, and sensors usually need to be installed around a vehicle, to improve a capability of the ADAS to detect a road target. A vehicle-mounted millimeter-wave radar is one of the key sensors commonly used in vehicles.

With an increasing quantity of vehicles equipped with radars, mutual interference between radars of vehicles cannot be ignored. Currently, an interference detection threshold corresponding to a radar echo signal may be generally determined by using an energy average method, and then each sampling point signal included in the radar echo signal is detected based on the interference detection threshold. If there is an over-threshold sampling point signal, it is determined that the sampling point signal is interfered (that is, the radar echo signal has an interference signal). However, this method has low detection precision and weak applicability.

### SUMMARY

Embodiments of this application provide an interference detection method and apparatus, to improve interference detection precision.

According to a first aspect, this application provides an interference detection method. The method includes: obtaining a digital signal obtained by processing a radar echo signal; processing the digital signal via at least two filters with different cut-off frequencies to obtain at least two filtered signals; and determining, based on each of the at least two filtered signals and an interference detection threshold corresponding to each filtered signal, whether an interference signal exists in the radar echo signal. It may be understood that the method may be performed by an interference detection apparatus. For example, the interference detection apparatus may be a radar apparatus. For example, the radar apparatus may be a millimeter-wave radar, and the radar echo signal may be a frequency-modulated continuous wave signal.

In this embodiment of this application, the digital signal obtained by processing the radar echo signal is obtained, and the digital signal is input in parallel to the at least two filters with different cut-off frequencies for processing, to obtain the at least two filtered signals with different frequency band ranges. Further, interference detection is separately performed on filtered signals based on interference detection thresholds of the filtered signals, and finally, whether an interference signal exists in the radar echo signal is determined based on results of the interference detection of the filtered signals. This improves precision of detecting an interference signal existing in the radar echo signal.

With reference to the first aspect, in a possible implementation, the at least two filters include at least two of the following filters: a low-pass filter, a band-pass filter, a high-pass filter, and a band-stop filter.

With reference to the first aspect, in a possible implementation, the at least two filters include at least one low-pass filter and at least one band-pass filter; the at least two filters include at least one band-pass filter and at least one high-pass filter; the at least two filters include at least one low-pass filter and at least one high-pass filter; the at least two filters include at least two band-pass filters; the at least two filters include at least two band-stop filters; or the at least two filters include at least one band-pass filter and at least one band-stop filter.

With reference to the first aspect, in a possible implementation, the at least two filters include a low-pass filter with a first cut-off frequency, a band-pass filter with a second cut-off frequency, and a high-pass filter with a third cut-off frequency. The second cut-off frequency includes an upper limit cut-off frequency and a lower limit cut-off frequency, the lower limit cut-off frequency is not greater than the first cut-off frequency, and the upper limit cut-off frequency is not less than the third cut-off frequency.

In this embodiment of this application, the digital signal is filtered via a plurality of filters with different cut-off frequencies, to obtain a plurality of filtered signals with different frequency band ranges. Further, missing detection of an interference signal existing in the radar echo signal can be effectively avoided, detection precision of an interference signal in the radar echo signal is improved.

With reference to the first aspect, in a possible implementation, each of the at least two filtered signals includes at least one sampling point signal; and the determining, based on each of the at least two filtered signals and an interference detection threshold corresponding to each filtered signal, whether an interference signal exists in the radar echo signal includes: determining a signal index value corresponding to a first sampling point signal that is in the at least one sampling point signal included in each filtered signal and that is not less than the interference detection threshold corresponding to each filtered signal; and determining, based on the signal index value corresponding to the first sampling point signal included in each filtered signal, whether an interference signal exists in the radar echo signal.

In this embodiment of this application, the first sampling point signal that is in the at least one sampling point signal included in each filtered signal and that is greater than or equal to the interference detection threshold corresponding to the filtered signal is obtained, to determine, based on the signal index value corresponding to the first sampling point signal included in each filtered signal, whether an interference signal exists in the radar echo signal. This improves an interference detection granularity.

With reference to the first aspect, in a possible implementation, the determining, based on the signal index value corresponding to the first sampling point signal included in each filtered signal, whether an interference signal exists in the radar echo signal includes: generating, based on the signal index value corresponding to the first sampling point signal included in each filtered signal, a signal index value set corresponding to each filtered signal, where one filtered signal corresponds to one signal index value set; and determining, based on the signal index value set corresponding to each filtered signal, whether an interference signal exists in the radar echo signal.

With reference to the first aspect, in a possible implementation, the determining, based on the signal index value set corresponding to each filtered signal, whether an interference signal exists in the radar echo signal includes: performing fusion processing on signal index value sets corresponding to all filtered signals, to obtain a fusion result; and determining, based on the fusion result, whether an interference signal exists in the radar echo signal.

In this embodiment of this application, the fusion processing is performed on the signal index value sets of all the filtered signals, so that the interference signal existing in the radar echo signal is determined based on the fusion result, and interference signals of various types of strength can be detected. This improves detection precision.

With reference to the first aspect, in a possible implementation, the performing fusion processing on signal index value sets corresponding to all filtered signals, to obtain a fusion result includes: taking a union set or an intersection set of the signal index value sets corresponding to all the filtered signals, to obtain a set of over-threshold sampling point signals; and determining the set of over-threshold sampling point signals as the fusion result.

In this embodiment of this application, taking the union set of the signal index value sets corresponding to all the filtered signals can increase a quantity of interference signals included in the fusion result, and detection precision can be improved.

With reference to the first aspect, in a possible implementation, the determining, based on the fusion result, whether an interference signal exists in the radar echo signal includes: if the set of over-threshold sampling point signals is a non-empty set, determining that an interference signal exists in the radar echo signal; or if the set of over-threshold sampling point signals is an empty set, determining that no interference signal exists in the radar echo signal.

With reference to the first aspect, in a possible implementation, the determining, based on the signal index value set corresponding to each filtered signal, whether an interference signal exists in the radar echo signal includes: determining a quantity of non-empty sets from at least two signal index value sets; obtaining an interference decision threshold, and determining, based on the interference decision threshold, the quantity of sets, and a quantity of filters, whether an interference signal exists in the radar echo signal.

In this embodiment of this application, whether an interference signal exists in the radar echo signal is determined in an n/m decision manner, so that interference detection manners are more diversified, and applicability is improved.

With reference to the first aspect, in a possible implementation, the determining, based on the interference decision threshold, the quantity of sets, and a quantity of filters, whether an interference signal exists in the radar echo signal includes: determining a ratio of the quantity of sets to the quantity of filters; and if the ratio is not less than the interference decision threshold, determining that an interference signal exists in the radar echo signal; or if the ratio is less than the interference decision threshold, determining that no interference signal exists in the radar echo signal.

With reference to the first aspect, in a possible implementation, after the determining, based on each filtered signal and an interference detection threshold corresponding to each filtered signal, whether an interference signal exists in the radar echo signal, the method further includes: if determining that an interference signal exists in the radar echo signal, performing interference cancellation processing on the radar echo signal.

In this embodiment of this application, the interference cancellation processing is performed on the radar echo signal based on a result of interference detection, so that interference existing in the radar echo signal can be reduced, and an interference suppression effect can be improved. Further, when operations such as distance measuring and speed measurement are performed on a radar echo signal obtained after the interference cancellation processing, precision of the distance measuring and speed measurement may be further improved.

According to a second aspect, this application provides an interference detection apparatus. The apparatus includes: an obtaining unit, configured to obtain a digital signal obtained by processing a radar echo signal; a filtering unit, configured to separately perform filtering processing at different cut-off frequencies on the digital signal, to obtain at least two filtered signals; and a processing unit, configured to determine, based on each of the at least two filtered signals and an interference detection threshold corresponding to each filtered signal, whether an interference signal exists in the radar echo signal.

With reference to the second aspect, in a possible implementation, at least two filters include at least two of the following filters: a low-pass filter, a band-pass filter, a high-pass filter, and a band-stop filter.

With reference to the second aspect, in a possible implementation, the at least two filters include at least one low-pass filter and at least one band-pass filter; the at least two filters include at least one band-pass filter and at least one high-pass filter; the at least two filters include at least one low-pass filter and at least one high-pass filter; the at least two filters include at least two band-pass filters; the at least two filters include at least two band-stop filters; or the at least two filters include at least one band-pass filter and at least one band-stop filter.

With reference to the second aspect, in a possible implementation, the at least two filters include a low-pass filter with a first cut-off frequency, a band-pass filter with a second cut-off frequency, and a high-pass filter with a third cut-off frequency. The second cut-off frequency includes an upper limit cut-off frequency and a lower limit cut-off frequency, the lower limit cut-off frequency is not greater than the first cut-off frequency, and the upper limit cut-off frequency is not less than the third cut-off frequency.

With reference to the second aspect, in a possible implementation, each of the at least two filtered signals includes at least one sampling point signal; and the processing unit is specifically configured to:
determine a signal index value corresponding to a first sampling point signal that is in the at least one sampling point signal included in each filtered signal and that is not less than the interference detection threshold corresponding to each filtered signal; and determine, based on the signal index value corresponding to the first sampling point signal included in each filtered signal, whether an interference signal exists in the radar echo signal.

With reference to the second aspect, in a possible implementation, the processing unit is further configured to:
generate, based on the signal index value corresponding to the first sampling point signal included in each filtered signal, a signal index value set corresponding to each filtered signal, where one filtered signal corresponds to one signal index value set; and
determine, based on the signal index value set corresponding to each filtered signal, whether an interference signal exists in the radar echo signal.

With reference to the second aspect, in a possible implementation, the processing unit is further configured to:
perform fusion processing on signal index value sets corresponding to all filtered signals, to obtain a fusion result; and
determine, based on the fusion result, whether an interference signal exists in the radar echo signal.

With reference to the second aspect, in a possible implementation, the processing unit is further configured to:
take a union set or an intersection set of the signal index value sets corresponding to all the filtered signals, to obtain a set of over-threshold sampling point signals; and
determine the set of over-threshold sampling point signals as the fusion result.

With reference to the second aspect, in a possible implementation, the processing unit is further configured to:
if the set of over-threshold sampling point signals is a non-empty set, determine that an interference signal exists in the radar echo signal; or
if the set of over-threshold sampling point signals is an empty set, determine that no interference signal exists in the radar echo signal.

With reference to the second aspect, in a possible implementation, the processing unit is further configured to:
determine a quantity of non-empty sets from at least two signal index value sets; and
obtain an interference decision threshold, and determine, based on the interference decision threshold, the quantity of sets, and a quantity of filters, whether an interference signal exists in the radar echo signal.

With reference to the second aspect, in a possible implementation, the processing unit is further configured to:
determine a ratio of the quantity of sets to the quantity of filters; and
if the ratio is not less than the interference decision threshold, determine that an interference signal exists in the radar echo signal; or
if the ratio is less than the interference decision threshold, determine that no interference signal exists in the radar echo signal.

With reference to the second aspect, in a possible implementation, the processing unit is further configured to:
if determining that an interference signal exists in the radar echo signal, perform interference cancellation processing on the radar echo signal.

For technical effects brought by the second aspect or the possible implementations of the second aspect, refer to the descriptions of the technical effects of the first aspect or the implementations of the first aspect. Details are not described again.

According to a third aspect, a detection apparatus is provided. The detection apparatus may be a radar or a component (for example, a circuit or a chip) used for a radar, and includes a processor and a memory. The processor and the memory are connected to each other. The memory is configured to store one or more programs. The processor is configured to invoke the program stored in the memory. When the program is executed by a computer, the computer is enabled to perform the interference detection method in any one of the first aspect and the possible implementations of the first aspect. Optionally, the detection apparatus further includes a communication interface, where the communication interface is configured to receive and send data. The processor and the memory may be units that are physically independent of each other, or the memory may be integrated with the processor.

According to a fourth aspect, an embodiment of this application further provides a computer-readable storage medium. The computer storage medium stores a computer program. When the computer program is run on a computer, the computer is enabled to perform the method according to the first aspect or the implementations of the first aspect.

According to a fifth aspect, an embodiment of this application provides a chip. The chip includes a processor and a communication interface. The processor is configured to invoke instructions from the communication interface and run the instructions. When the processor executes the instructions, the chip is enabled to perform the method according to the first aspect or the implementations of the first aspect.

In embodiments of this application, based on the at least two filters with different cut-off frequencies, obtained digital signals are divided into the at least two filtered signals with different frequency band ranges, to perform interference detection on each filtered signal, so as to implement interference detection on the radar echo signal. This improves interference detection precision.

### BRIEF DESCRIPTION OF DRAWINGS

FIG. 1 is a schematic diagram of an architecture of a radar system;
FIG. 2 is a schematic diagram of a structure of a millimeter-wave radar according to an embodiment of this application;
FIG. 3 is a schematic diagram of mutual interference between radars according to an embodiment of this application;
FIG. 4 is a schematic flowchart of an interference detection method;
FIG. 5 is a schematic diagram of results of interference detection performed on a radar echo signal in different scenarios based on an energy average method;
FIG. 6 is a schematic flowchart of an interference detection method according to an embodiment of this application;
FIG. 7a is a schematic diagram of a filter selection manner according to an embodiment of this application;
FIG. 7b is a schematic diagram of another filter selection manner according to an embodiment of this application;
FIG. 8 is a schematic diagram of effects of filtering a digital signal by a filter according to an embodiment of this application;
FIG. 9 is a schematic diagram of signal index values according to an embodiment of this application;
FIG. 10 is a schematic diagram of an application scenario of interference detection according to an embodiment of this application;
FIG. 11 is a schematic diagram of test results of interference detection methods according to an embodiment of this application;
FIG. 12 is a schematic diagram of a structure of an interference detection apparatus according to an embodiment of this application;
FIG. 13 is a schematic diagram of a structure of another interference detection apparatus according to an embodiment of this application; and
FIG. 14 is a schematic diagram of a structure of a chip according to an embodiment of this application.

### DESCRIPTION OF EMBODIMENTS

The following describes embodiments of this application with reference to the accompanying drawings in embodiments of this application.

For ease of understanding, the following first explains some terms in embodiments of this application.
1. A radar is also referred to as a radar apparatus, or may be referred to as a detector, a radar detection apparatus, a detection apparatus, a radar signal sending apparatus, or the like. A working principle of the radar is that the radar sends a signal (or referred to as a detection signal) and receives a reflected signal reflected by a target object to detect a corresponding target object. The signal sent by the radar may be a radar signal. Correspondingly, the received reflected signal reflected by the target object may also be a radar signal. Generally, a radar may transmit a plurality of radar signals outward and receive a plurality of echo/reflected signals reflected by a target object. Further, the radar processes each received signal.
2. A frequency-modulated continuous wave (frequency-modulated continuous wave, FMCW), also called a chirp signal, is an electromagnetic wave whose frequency varies with time.
3. A linear frequency-modulated continuous wave (Linear frequency-modulated continuous wave, LFMCW) is an electromagnetic wave whose frequency varies linearly with time. That the frequency varies linearly with time usually means that the frequency varies linearly with time in one transmission periodicity. Specifically, a waveform of the linear frequency-modulated continuous wave is generally a sawtooth wave or a triangular wave, or may be another possible waveform, for example, a linear frequency-modulated frequency stepping waveform.
4. An intermediate frequency (Intermediate Frequency, IF) signal is a signal obtained by processing a radar local oscillator signal and a received target reflection signal by a frequency mixer. Specifically, a part of a frequency-modulated continuous wave signal generated by an oscillator is used as a local oscillator signal, and a part of the frequency-modulated continuous wave signal is transmitted through a transmit antenna as a transmit signal. A reflected signal of the transmit signal received by a receive antenna is mixed with the local oscillator signal, and the "intermediate frequency signal" is obtained. At least one of location information, speed information, and angle information of a target object may be obtained based on the intermediate frequency signal. The location information, the speed information, and the angle information may be relative location information, relative speed information, and relative angle information relative to a current radar. Further, a frequency of the intermediate frequency signal is an intermediate frequency.
5. A field of view (field of view, FOV) is a visible world, also called a vision field. During target detection, a line of sight (line of sight, LOS) area between a transmit module and a target object or between a receive module and the target object needs to have uninterrupted signal (for example, a radio wave or a laser) transmission. The line of sight area may be understood as the field of view. Within the FOV, a signal can be transmitted to a receiver or the target object.

In a real world, there are often obstacles such as buildings and trees that hinder direct transmission in the line of sight area. The LOS is affected, and a non-line-of-sight (non-line-of-sight, NLOS) area is formed.

The following describes a system architecture and a service scenario in embodiments of this application. It should be noted that the system architecture and the service scenario described in this application are intended to describe technical solutions in this application more clearly, and do not constitute a limitation on the technical solutions provided in this application. Persons of ordinary skill in the art may know that with evolution of the system architecture and emergence of new service scenarios, the technical solutions provided in this application are also applicable to similar technical problems.

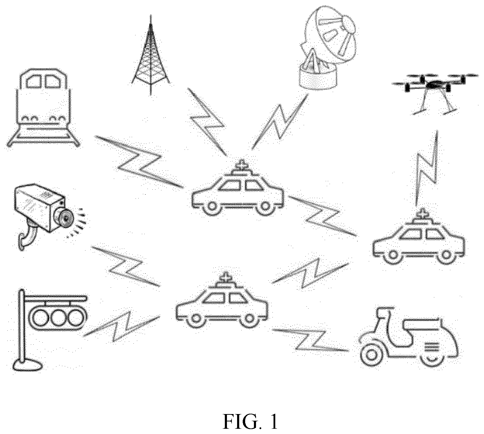

Refer to FIG. 1. FIG. 1 is a schematic diagram of an architecture of a radar system. As shown in FIG. 1, a radar may be a radar installed on a terminal device (terminal for short) like a motor vehicle, an intersection camera, an uncrewed aerial vehicle, a railcar, a bicycle, a signal lamp, or a speed measurement apparatus. Optionally, the radar may also be a radar installed on a network device (for example, a base station in various systems). This is not limited herein. It may be understood that the radar mentioned in embodiments of this application may be a millimeter-wave radar, a laser radar, an ultrasonic radar, or the like. This is not limited herein. The millimeter-wave radar includes an FMCW radar, an LFMCW radar, and the like. This is not limited herein. It may be understood that the radar in embodiments of this application can be applied to various fields such as intelligent transportation, autonomous driving, atmospheric environment monitoring, geographical mapping, and an uncrewed aerial vehicle, and can complete one or more functions of target detection, distance measurement, speed measurement, target tracking, and imaging recognition.

It may be understood that embodiments of this application are applicable to a radar system between vehicles, a radar system between a vehicle and another apparatus like an uncrewed aerial vehicle, a radar system between other apparatuses, or the like. This is not limited herein. For example, the radar may be installed on intelligent terminals such as an intelligent transportation device, a smart home device, and a robot. A type of a terminal device on which a radar is installed, an installation location of a radar, and a function of a radar are not limited in embodiments of this application. For ease of understanding, the following embodiments of this application are described by using an example in which an intelligent terminal is an intelligent transportation device and a radar is a millimeter-wave radar.

It may be understood that, because of low costs and mature technologies, the millimeter-wave radar is the first to become a main sensor of an unmanned driving system and an assisted driving system. Currently, an ADAS has developed more than 10 functions, including adaptive cruise control (Adaptive Cruise Control, ACC), autonomous emergency braking (Autonomous Emergency Braking, AEB), lane change assist (Lance Change Assist, LCA), and blind spot monitoring (Blind Spot Monitoring, BSD). All these functions rely on the millimeter-wave radar. A millimeter wave is an electromagnetic wave whose wavelength is between 1 mm to 10 mm, and a corresponding frequency range is 30 GHz to 300 GHz. In this frequency band, features related to the millimeter wave enable the millimeter wave to be very suitable for the vehicle-mounted field. High bandwidth means that there are abundant frequency domain resources and a low antenna side lobe. This facilitates imaging or quasi-imaging. A short wavelength means that a size of a radar device and an antenna diameter are reduced, and therefore a weight is reduced. A narrow beam means that in a case of a same antenna size, a millimeter-wave beam is much narrower than a micrometer-wave beam, and therefore there is high radar resolution. Strong penetration means that compared with a laser radar and an optical system, the millimeter-wave radar has a better capability of penetrating smoke, dust, and fog, and can work around the clock.

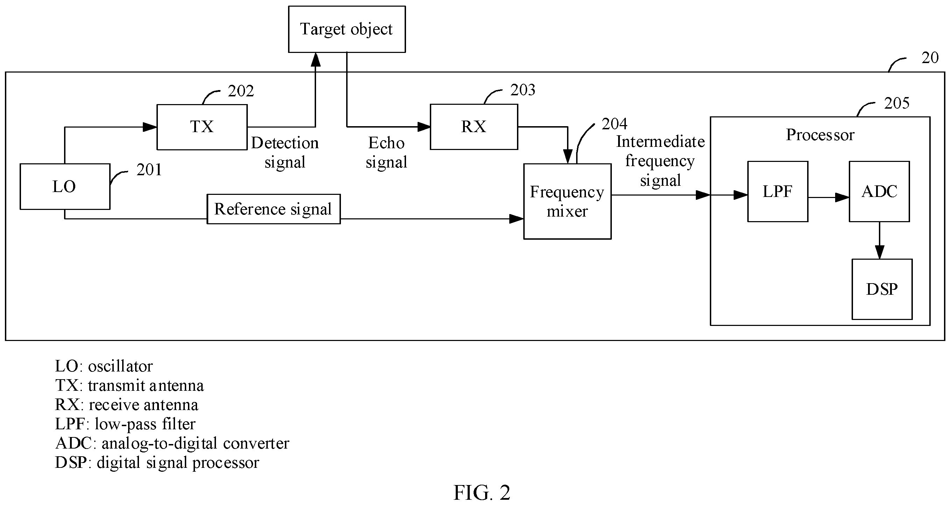

Refer to FIG. 2. FIG. 2 is a schematic diagram of a structure of a millimeter-wave radar according to an embodiment of this application. As shown in FIG. 2, the millimeter-wave radar generally includes an oscillator (local oscillation, LO) 201, a transmit antenna (TX) 202, a receive antenna (RX) 203, a frequency mixer (mixer) 204, a processor 205, and the like. The processor may include processing apparatuses such as a low-pass filter (low-pass filter, LPF), an analog-to-digital converter (analog-to-digital converter, ADC), and a digital signal processor (digital signal processor, DSP).

The oscillator generates a signal whose frequency increases linearly over time, and a radar signal is generally a frequency-modulated continuous wave. A part of the signal is output to the frequency mixer as a local oscillator signal, and another part is transmitted through the transmit antenna. The receive antenna receives an echo signal that is reflected back after the transmitted radar signal meets a target object. The frequency mixer mixes the echo signal and the local oscillator signal to obtain an intermediate frequency signal. Relative distance, speed, and angle information between a target object and a radar system can be determined based on the intermediate frequency signal. For example, an intermediate frequency signal passes through the low-pass filter, is amplified, and then is transmitted to the processor. The processor processes the received signal (generally, fast Fourier transform, spectrum analysis, and the like are performed on the received signal), to obtain information like a distance, a speed, and an angle of a target object relative to a radar system. Further, when the intermediate frequency signal is processed, the fast Fourier transform is generally and separately performed at fast time and slow time. The fast time refers to a time dimension of a single reflection periodicity of the millimeter-wave radar, and the slow time refers to a time dimension of a detection frame of the millimeter-wave radar (including transmission periodicities of a plurality of millimeter-wave radars).

In addition, the processor may further output the obtained information like a distance, a speed, and an angle to a controller (not shown in the figure), so that the controller makes a corresponding decision, for example, controls behavior of a vehicle. Optionally, the controller may be outside the radar, or may be inside the radar.

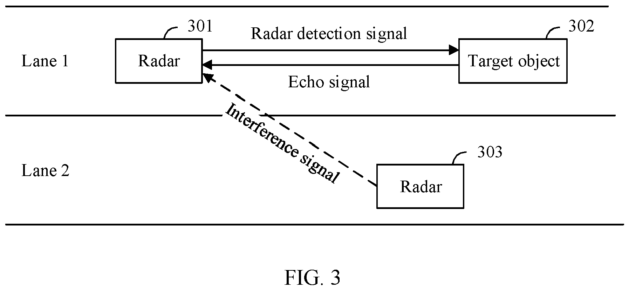

With wide use of millimeter-wave radars, mutual interference between intelligent terminals in which millimeter-wave radars are located becomes increasingly severe. This greatly reduces a radar detection probability or increases a false alarm probability of radar detection, and causes impact not to be neglected on driving safety or comfort. For example, refer to FIG. 3. FIG. 3 is a schematic diagram of mutual interference between radars according to an embodiment of this application. As shown in FIG. 3, a radar 301 may transmit a detection signal outward, and receive an echo signal reflected by a target object 302. However, because a radar 303 also exists in a field of view of the radar 301, in a process in which the radar 301 receives the echo signal reflected by the target object 302, a receive antenna of the radar 301 may also receive a transmit signal of the radar 303 or an echo signal corresponding to the transmit signal of the radar 303. In this case, the transmit signal of the radar 303 or the echo signal corresponding to the transmit signal of the radar 303 that is received by the radar 301 is an interference signal for the radar 301. A receiving module of the radar 301 may perform a same signal processing operation on received signals (the received signals include the echo signal reflected by the target object 302 and the transmit signal from the radar 303). As a result, the transmit signal of the radar 303 interferes with original processing of the echo signal. It may be understood that, when an interference signal exists in the received signal of the radar 301, the interference signal increases a false alarm probability of the radar, or the interference signal may reduce a radar detection probability.

For example, in the scenario shown in FIG. 3, the radar 301 may receive the echo signal of the target object 302 within time of receiving an echo signal, to obtain an intermediate frequency signal of the real echo signal. In addition, the radar 301 may further receive a signal transmitted by the radar 303, and after processing the signal, the radar obtains an intermediate frequency signal of the interference signal. After processing the real intermediate frequency signal, the radar may learn that there is a target object 1 in front of the radar. Further, after processing the intermediate frequency signal of the interference signal, the radar 301 may consider that there is a target object 2 in front of the radar 301. However, actually, the target object 2 does not exist. This case is referred to as a "false alarm" or "ghost". After the false alarm is generated, an autonomous driving vehicle (that is, a vehicle in which the radar 301 is located) may turn to avoid, decelerate, or suddenly brake when there is no object in front of the vehicle. This reduces driving comfort and safety.

In addition, the interference signal may cover the real echo signal (or submerge the real echo signal), causing missing detection of a radar signal. For example, refer to the scenario shown in FIG. 3. The radar 301 receives, within the time of receiving an echo signal, the echo signal of the target object 302 and the signal transmitted by the radar 303 (or the echo signal corresponding to the transmit signal of the radar 303). If a frequency range of the signal of the radar 303 is the same as that of a signal of the radar 301, after the radar 301 processes the signal transmitted by the radar 303, the real echo signal may not be obvious enough, and the real echo signal is even covered. This causes difficulty in detecting a target object, and increases a possibility of missing detection. After the missing detection is generated, when there is an object in front of an autonomous driving vehicle, the autonomous driving vehicle may mistakenly determine that there is no object, and does not perform an operation like deceleration, avoidance, or braking. This causes a traffic accident, reduces driving safety of the vehicle, and endangers personal safety of a passenger.

Therefore, how to improve the driving safety of the vehicle has become an international research hotspot in recent years. Currently, most of existing research work focuses on realization of entire anti-collision radar system, or on realization of comfort. Research on interference between radar systems is not paid much attention. In addition, interference detection on a radar echo signal is a prerequisite for subsequent interference suppression and interference avoidance methods, that is, interference detection precision directly affects anti-interference performance of a radar system. Therefore, how to improve the interference detection precision is of great practical significance.

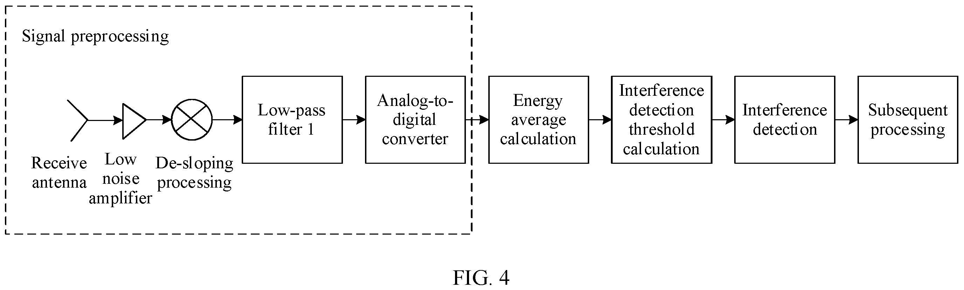

In an implementation, interference detection may be performed by using an energy average method. Refer to FIG. 4. FIG. 4 is a schematic flowchart of an interference detection method. As shown in FIG. 4, first, a radar echo signal may be received through a receive antenna, and then the received radar echo signal is preprocessed by a low noise amplifier, a de-sloping processing module, a low-pass filter 1, and an analog-to-digital converter (analog-to-digital converter, ADC) in sequence, to obtain a digital signal output by the ADC. An energy average of the digital signal may be obtained by performing energy average calculation on the digital signal. Then, an interference detection threshold corresponding to the radar echo signal may be obtained by multiplying the energy average obtained through calculation by a fixed coefficient. Finally, energy of each sampling point signal included in the digital signal is detected based on the interference detection threshold. If there is an over-threshold sampling point signal, it is determined that the sampling point signal is interfered (that is, an interference signal exists in the radar echo signal), and subsequent processing (for example, interference suppression or signal reconstruction) is performed on the interference signal. However, interference signals with different frequencies may exist in the radar echo signal, and generally, signal strength of the interference signals with different frequencies is different. Therefore, in this manner of performing interference detection on a radar echo signal in a large frequency band range by using an energy average method, interference signals with weak signal strength may not be detected, and detection precision is not high especially in a multi-interference-source scenario.

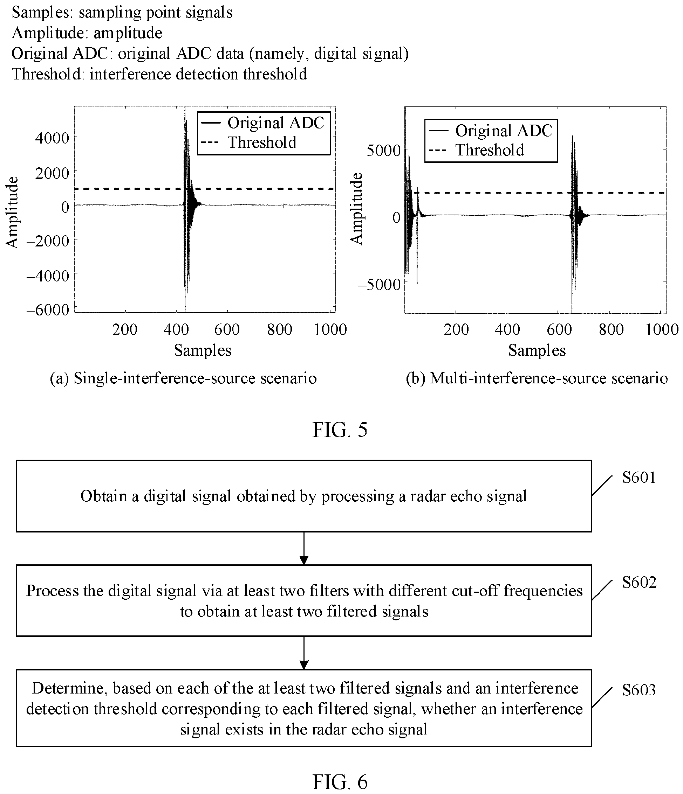

For example, FIG. 5 is a schematic diagram of results of interference detection performed on a radar echo signal in different scenarios based on an energy average method. As shown in FIG. 5, (a) in FIG. 5 is a result of interference detection in a single-interference-source scenario, and (b) in FIG. 5 is a result of interference detection in a multi-interference-source scenario. In FIG. 5, ADC data denotes a digital signal obtained by processing a radar echo signal, threshold denotes an interference detection threshold, Sample denotes a sampling point, and Amplitude denotes an amplitude. It may be understood that, regardless of the single-interference-source scenario or the multi-interference-source scenario, a higher proportion of an interfered sampling point indicates a larger calculated energy average. Therefore, an interference detection threshold calculated based on a same fixed coefficient is also larger. During interference detection, interference determining is performed based on an interference detection threshold. That is, a sampling point whose energy is greater than the interference detection threshold is determined as an interfered sampling point. Therefore, if a calculated interference detection threshold is large, only some sampling points that are strongly interfered can be detected, and sampling points that are less interfered cannot be detected. As a result, interference detection precision is low.

Based on this, this application proposes an interference detection method. A digital signal obtained by processing a radar echo signal is obtained, and the digital signal is input in parallel to at least two filters with different cut-off frequencies for processing, to obtain at least two filtered signals with different frequency band ranges. Further, interference detection is separately performed on filtered signals based on interference detection thresholds of the filtered signals, and finally, whether an interference signal exists in the radar echo signal is determined based on results of the interference detection of the filtered signals. This improves precision of detecting an interference signal existing in the radar echo signal.

FIG. 6 is a schematic flowchart of an interference detection method according to an embodiment of this application. The method may be implemented based on an interference detection apparatus. It may be understood that the interference detection apparatus may be a radar, or may be deployed in a radar (for example, a millimeter-wave radar or another radar), that is, may be a chip inside a radar. Alternatively, the interference detection apparatus may be deployed outside a radar, to assist the radar in working. This is not limited herein. The interference detection method includes at least the following steps.

S601: Obtain a digital signal obtained by processing a radar echo signal.

Specifically, the interference detection apparatus may obtain the digital signal obtained by processing the radar echo signal. The interference detection apparatus may be a radar or another apparatus having a detection function. For example, the interference detection apparatus may be at least one of a millimeter-wave radar, an ultrasonic radar, a laser radar, an infrared detector, a distance measurement apparatus, and the like. In other words, the interference detection apparatus may be deployed in a radar (for example, a millimeter-wave radar or another radar), the interference detection apparatus is a radar, or the interference detection apparatus may be deployed outside a radar to assist the radar in working.

If the interference detection apparatus is deployed in a radar or the interference detection apparatus is a radar, after a receive antenna of the radar receives the radar echo signal, each module included in the radar may preprocess the radar echo signal, to obtain the digital signal. For example, refer to FIG. 4. After the receive antenna of the radar receives the radar echo signal, the received radar echo signal may be first processed by the low noise amplifier, to reduce noise in the radar echo signal. Then, a signal obtained through processing by the low noise amplifier is sequentially input to the de-sloping processing module and an analog low-pass filter (the low-pass filter 1 shown in FIG. 4) for processing, to obtain a baseband signal. Further, the baseband signal is input to the ADC, to obtain a digital signal determined by the ADC by performing digital sampling. Therefore, further processing may be performed on the digital signal subsequently.

Optionally, if the interference detection apparatus is deployed outside a radar, the interference detection apparatus receives, from the radar, a digital signal obtained through preprocessing, so that the interference detection apparatus further processes the received digital signal.

Optionally, if the interference detection apparatus is deployed outside a radar, the interference detection apparatus may further receive a radar echo signal, and then input the received radar echo signal to the radar for preprocessing, to obtain a digital signal corresponding to the radar echo signal. Further, the interference detection apparatus receives the digital signal from the radar, to further process the received digital signal subsequently.

It may be understood that the radar echo signal in this application may be a received echo signal that is returned by a target object based on a detection signal after the radar transmits the detection signal outward, a detection signal transmitted by another radar in a field of view of the radar, an echo signal corresponding to a detection signal of another radar, and/or the like. This is not limited herein. For example, in the scenario shown in FIG. 3, the radar 301 may transmit a detection signal outward, and receive an echo signal reflected by the target object 302. However, because the radar 303 is also in a field of view of the radar 301, in a process in which the radar 301 receives the echo signal reflected by the target object 302, the receive antenna of the radar 301 may also receive a detection signal transmitted by the radar 303. In this case, a radar echo signal received by the radar 301 includes the echo signal reflected by the target object 302 and the detection signal transmitted by the radar 303. A transmit signal of the radar 303 received by the radar 301 is an interference signal for the radar 301. It may be understood that, because a digital signal is more convenient for storage and analysis than an analog signal, after the radar echo signal is received, the radar echo signal first needs to be processed to obtain a digital signal, and then the digital signal is analyzed.

S602: Process the digital signal via at least two filters with different cut-off frequencies to obtain at least two filtered signals.

In some feasible implementations, the digital signal is separately processed by the at least two filters with different cut-off frequencies, to obtain the at least two filtered signals. A superposition/synthesis result of the at least two filtered signals is the same as the digital signal. In this embodiment of this application, that the obtained superposition result of the at least two filtered signals is the same as the digital signal may be understood as that a superposition/synthesis result of the filtered signals is the same as the digital signal within a specific error range. This is because an actual filtering effect of a filter is not ideal. As a result, an error exists. In other words, the at least two filters selected in this embodiment of this application need to meet the following condition: The superposition/synthesis result of the at least two filtered signals obtained through filtering is basically the same as the digital signal, that is, the superposition/synthesis result of the at least two filtered signals obtained through filtering is the same as the digital signal within a specific error range. In other words, the at least two filters selected in this application need to meet the following condition: The at least two filtered signals obtained through filtering can carry all frequency information or most frequency information of the digital signal.

It may be understood that the at least two filters may be at least two of a low-pass filter, a band-pass filter, a high-pass filter, and a band-stop filter. For example, the at least two filters may include at least one low-pass filter and at least one band-pass filter, the at least two filters include at least one band-pass filter and at least one high-pass filter, the at least two filters include at least one low-pass filter and at least one high-pass filter, the at least two filters include at least two band-pass filters, the at least two filters include at least two band-stop filters, or the at least two filters include at least one band-pass filter and at least one band-stop filter. This is specifically determined based on an actual application scenario, and is not limited herein. Optionally, the selected at least two filters may further include at least one low-pass filter, at least one band-pass filter, at least one high-pass filter, and the like. This is specifically determined based on an actual application scenario, and is not limited herein.

In this embodiment of this application, a filter (that is, each of the at least two filters) configured to process a digital signal may be an infinite impulse response (infinite impulse response, IIR) filter, a finite impulse response (finite impulse response filter, FIR) filter, a filter of another type, or the like. This is not limited herein. Parameters such as an order and a cut-off frequency of the filter may be set based on an actual application scenario, a characteristic of an interference source, and a characteristic of a target object.

Generally, a boundary frequency of a passband and a stopband is referred to as a cut-off frequency. For an amplitude-frequency response, a signal frequency range that can pass through a filter is generally referred to as the passband, and a frequency signal range in which a signal is blocked and attenuated is referred to as the stopband. It may be understood that a characteristic of the low-pass filter is that a low-frequency or direct-current component in a signal is allowed to pass, and a high-frequency component or interference and noise is/are suppressed. Assuming that a cut-off frequency of the low-pass filter is a first cut-off frequency, an ideal low-pass filter should enable all signals whose cut-off frequencies are lower than the first cut-off frequency to pass without loss, and all signals whose cut-off frequencies are higher than the first cut-off frequency should be attenuated infinitely. Correspondingly, a characteristic of the band-pass filter is that a signal within a specific frequency band range is allowed to pass, and a signal, interference, and noise that are lower than or higher than the frequency band are suppressed. It is assumed that a cut-off frequency of the band-pass filter is a second cut-off frequency, where the second cut-off frequency includes an upper limit cut-off frequency and a lower limit cut-off frequency, and the upper limit cut-off frequency is greater than the lower limit cut-off frequency. In this case, an ideal band-pass filter may allow all signals whose cut-off frequencies are between the lower limit cut-off frequency and the upper limit cut-off frequency to pass without loss, and prevent/suppress passage of a signal whose cut-off frequency is less than the lower limit cut-off frequency and greater than the upper limit cut-off frequency. Correspondingly, a characteristic of the high-pass filter is that a high-frequency component in a signal is allowed to pass, and a low-frequency component or a direct-current component is suppressed. Assuming that a cut-off frequency of the high-pass filter is a third cut-off frequency, an ideal high-pass filter may allow all signals whose cut-off frequencies are higher than the third cut-off frequency to pass without loss, and all signals whose cut-off frequencies are lower than the third cut-off frequency are attenuated infinitely. Correspondingly, a characteristic of the band-stop filter is that a signal in a specific frequency band is suppressed and a signal outside the frequency band is allowed to pass. The band-stop filter is also called a notch filter. It is assumed that a cut-off frequency of the band-stop filter is a fourth cut-off frequency, where the fourth cut-off frequency includes an upper limit cut-off frequency and a lower limit cut-off frequency, and the upper limit cut-off frequency is greater than the lower limit cut-off frequency. In this case, an ideal band-stop filter may allow a signal whose cut-off frequency is less than the lower limit cut-off frequency and greater than the upper limit cut-off frequency to pass without loss, and prevent/suppress passage of a signal whose cut-off frequency is between the lower limit cut-off frequency and the upper limit cut-off frequency.

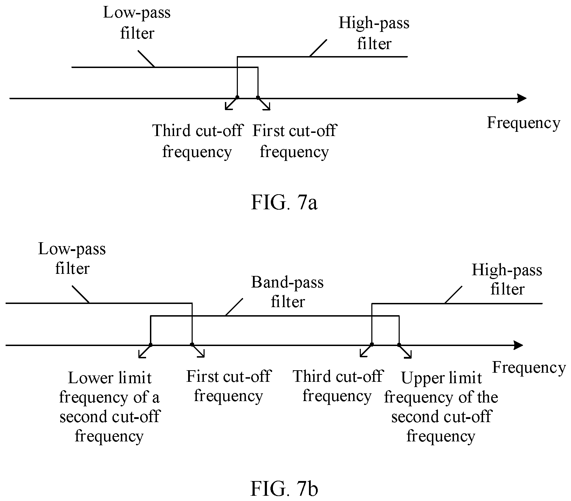

It may be understood that filtering ranges of the at least two filters selected in this embodiment of this application need to cover signals in all frequency band ranges included in the digital signal. For example, refer to FIG. 7a. FIG. 7a is a schematic diagram of a filter selection manner according to an embodiment of this application. As shown in FIG. 7a, assuming that the at least two filters selected in this embodiment of this application are a low-pass filter and a high-pass filter, a cut-off frequency of the low-pass filter is a first cut-off frequency, and a cut-off frequency of the high-pass filter is a third cut-off frequency, the first cut-off frequency needs to be greater than or equal to the third cut-off frequency. It can be learned from FIG. 7a that, when the first cut-off frequency of the low-pass filter is greater than or equal to the third cut-off frequency of the high-pass filter, filtering ranges of the selected two filters may cover signals in all frequency band ranges included in the digital signal.

For another example, refer to FIG. 7b. FIG. 7b is a schematic diagram of another filter selection manner according to an embodiment of this application. As shown in FIG. 7b, it is assumed that the at least two filters selected in this embodiment of this application are a low-pass filter, a band-pass filter, and a high-pass filter. A cut-off frequency of the low-pass filter is a first cut-off frequency, a cut-off frequency of the high-pass filter is a third cut-off frequency, and a cut-off frequency of the band-pass filter is a second cut-off frequency. The second cut-off frequency includes an upper limit frequency and a lower limit frequency, in this case, the lower limit frequency of the second cut-off frequency needs to be not greater than the first cut-off frequency (that is, the lower limit frequency of the second cut-off frequency needs to be less than or equal to the first cut-off frequency), and the upper limit frequency of the second cut-off frequency needs to be not less than the third cut-off frequency (that is, the upper limit frequency of the second cut-off frequency is greater than or equal to the third cut-off frequency). It can be learned from FIG. 7b that, when the lower limit frequency of the second cut-off frequency is less than or equal to the first cut-off frequency, and the upper limit frequency of the second cut-off frequency is greater than or equal to the third cut-off frequency, filtering ranges of the selected three filters may cover signals in all frequency band ranges included in the digital signal. The at least two filters selected in this application may further have a filter combination manner in another form. Examples are not described herein again.

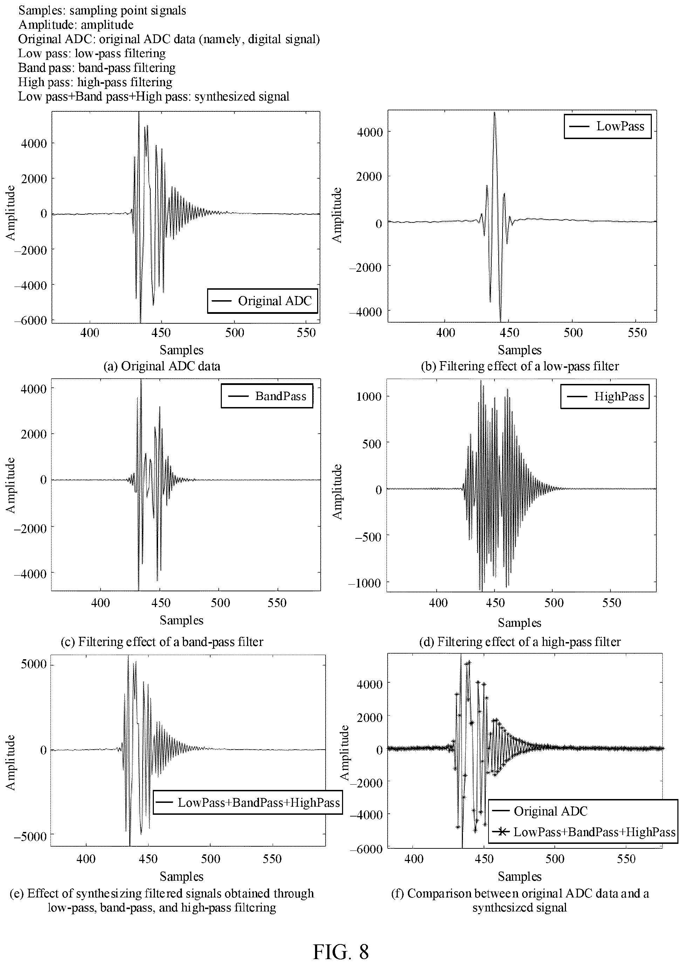

It may be understood that, during actual manufacturing, such an ideal characteristic is difficult to implement (that is, the filter is not ideal). Therefore, even if filtering ranges of the selected at least two filters cover signals in all frequency band ranges included in the digital signal, a filtering effect of the at least two filters has a specific error. For example, refer to FIG. 8. FIG. 8 is a schematic diagram of effects of filtering a digital signal by a filter according to an embodiment of this application. For example, the at least two filters are a low-pass filter, a band-pass filter, and a high-pass filter, (a) in FIG. 8 is a schematic diagram of original ADC data (namely, a digital signal). (b) in FIG. 8 is a schematic diagram of a filtered signal obtained by filtering the digital signal in (a) in FIG. 8 by the low-pass filter, (c) in FIG. 8 is a schematic diagram of a filtered signal obtained by filtering the digital signal by the band-pass filter, and (d) in FIG. 8 is a schematic diagram of a filtered signal obtained by filtering the digital signal by the high-pass filter, (e) in FIG. 8 is a schematic diagram of a synthesized signal obtained by synthesizing/superposing the filtered signals in (b), (c), and (d) in FIG. 8. (f) in FIG. 8 is a comparison diagram of the digital signal shown in (a) in FIG. 8 and the synthesized signal shown in (e) in FIG. 8. It can be learned from (f) in FIG. 8 that, the synthesized signal obtained by synthesizing the filtered signals obtained through filtering by the foregoing three filters is basically the same as the original digital signal, that is, a superposition/synthesis result of the filtered signals is the same as the original digital signal within a specific error range.

S603: Determine, based on each of the at least two filtered signals and an interference detection threshold corresponding to each filtered signal, whether an interference signal exists in the radar echo signal.

In some feasible implementations, whether an interference signal exists in the radar echo signal may be determined based on each of the at least two filtered signals and the interference detection threshold corresponding to each filtered signal. For a manner of determining the interference detection threshold corresponding to each of the at least two filtered signals, a same calculation manner may be used to determine the interference detection threshold corresponding to each filtered signal. For example, for each of the at least two filtered signals, the interference detection threshold corresponding to each filtered signal is calculated by using an energy average method. A calculation process of the energy average method is that an energy average of each sampling point signal included in a filtered signal is first calculated, and then a preset coefficient is obtained, to determine a product of the calculated energy average and the preset coefficient as an interference detection threshold corresponding to the filtered signal.

For example, the at least two filters are a low-pass filter and a high-pass filter respectively. It is assumed that a filtered signal obtained by passing through the low-pass filter is a first filtered signal, and a filtered signal obtained by passing through the high-pass filter is a second filtered signal. A calculated energy average of the first filtered signal is a first energy average, an energy average of the second filtered signal is a second energy average, and an obtained preset coefficient is a first coefficient. Therefore, an interference detection threshold corresponding to the first filtered signal is equal to a product of the first energy average and the first coefficient, and an interference detection threshold corresponding to the second filtered signal is equal to a product of the second energy average and the first coefficient. Optionally, a preset coefficient used to perform interference detection threshold calculation may further include a first coefficient and a second coefficient, where the first coefficient and the second coefficient are different coefficients. Therefore, the interference detection threshold corresponding to the first filtered signal may be equal to a product of the first energy average and the first coefficient, and the interference detection threshold corresponding to the second filtered signal may be equal to a product of the second energy average and the second coefficient.

Optionally, a manner of determining the interference detection threshold corresponding to each of the at least two filtered signals may also be different. For example, the at least two filters are a low-pass filter and a high-pass filter respectively. For the first filtered signal obtained through filtering by the low-pass filter, the interference detection threshold corresponding to the first filtered signal may be calculated based on the energy average method, and for the second filtered signal obtained through filtering by the high-pass filter, the interference detection threshold corresponding to the filtered signal may be calculated by using a constant false alarm rate (constant false alarm rate, CFAR) detection algorithm.

It may be understood that, in the at least two filtered signals obtained through filtering by the at least two filters, each filtered signal includes at least one sampling point signal. In other words, each filtered signal may consist of at least one sampling point signal. After an interference detection threshold corresponding to each filtered signal is calculated, whether an interference signal exists in the radar echo signal may be determined based on each filtered signal and the interference detection threshold corresponding to each filtered signal.

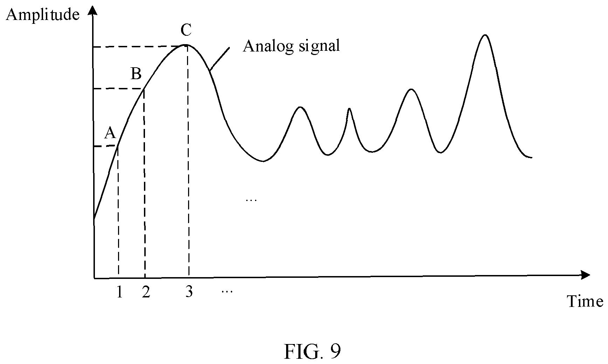

Specifically, first, a signal index value corresponding to a first sampling point signal that is not less than the interference detection threshold corresponding to each filtered signal may be determined from the at least one sampling point signal included in each filtered signal. Then, whether an interference signal exists in the radar echo signal is determined based on the signal index value corresponding to the first sampling point signal included in each filtered signal. It may be understood that one signal index value is used to mark one sampling point signal. The signal index value in this embodiment of this application may be a signal location, or may be another identifier used to identify a sampling point signal. This is specifically determined based on an actual application scenario, and is not limited herein. The signal location may be understood as a sampling sequence of an analog signal when an ADC converts the analog signal into a digital signal. For example, refer to FIG. 9. FIG. 9 is a schematic diagram of signal index values according to an embodiment of this application. A, B, and C shown in FIG. 9 are sampling point signals. A sampling sequence of the sampling point signals A, B, and C is that the sampling point signal A is the first sampling point, the sampling point signal B is the second sampling point, and the sampling point signal C is the third sampling point from left to right. Therefore, a signal index value of the sampling point signal may be a sampling sequence (or referred to as a sampling location) of the sampling point signal. As shown in FIG. 9, a signal index value of the sampling point signal A is 1, a signal index value of the sampling point signal B is 2, and a signal index value of the sampling point signal C is 3.

In some feasible implementations, that whether an interference signal exists in the radar echo signal is determined based on the signal index value corresponding to the first sampling point signal included in each filtered signal may be understood as that a signal index value set corresponding to each filtered signal is generated based on the signal index value corresponding to the first sampling point signal included in each filtered signal, where one filtered signal corresponds to one signal index value set. Therefore, whether an interference signal exists in the radar echo signal may be determined based on the signal index value set corresponding to each filtered signal. That whether an interference signal exists in the radar echo signal may be determined based on the signal index value set corresponding to each filtered signal may be understood as that fusion processing is performed on signal index value sets corresponding to all filtered signals to obtain a fusion result, and then whether an interference signal exists in the radar echo signal is determined based on the fusion result. The fusion processing may be understood as that a union set or an intersection set of the signal index value sets corresponding to all the filtered signals is taken, to obtain a set of over-threshold sampling point signals, and then the set of over-threshold sampling point signals is determined as the fusion result. It may be understood that if the set of over-threshold sampling point signals is a non-empty set, that an interference signal exists in the radar echo signal is determined. If the set of over-threshold sampling point signals is an empty set, it may be determined that no interference signal exists in the radar echo signal.

For example, the at least two filters are a low-pass filter, a band-pass filter, and a high-pass filter, that is, a quantity of filters is 3. It is assumed that a first filtered signal may be obtained by filtering a digital signal by a low-pass filter with a first cut-off frequency, a second filtered signal may be obtained by filtering the digital signal by a band-pass filter with a second cut-off frequency, and a third filtered signal may be obtained by filtering the digital signal by a high-pass filter with a third cut-off frequency. An interference detection threshold determined based on the first filtered signal is a first interference detection threshold, an interference detection threshold determined based on the second filtered signal is a second interference detection threshold, and an interference detection threshold determined based on the third filtered signal is a third interference detection threshold. It may be understood that, it is assumed that signal index values of first sampling points that are determined based on the first interference detection threshold from at least one sampling point signal included in the first filtered signal and that are greater than the first interference detection threshold are 1, 2, 3, 4, and 5 respectively; signal index values of first sampling points that are determined based on the second interference detection threshold from at least one sampling point signal included in the second filtered signal and that are greater than the second interference detection threshold are 6, 7, 8, and 9 respectively; and signal index values of first sampling points that are determined based on the third interference detection threshold from at least one sampling point signal included in the third filtered signal and that are greater than the third interference detection threshold are 10 and 11 respectively. In this case, a first signal index value set S1={1, 2, 3, 4, 5} corresponding to the first filtered signal, a second signal index value set S2={6, 7, 8, 9} corresponding to the second filtered signal, and a third signal index value set S3={ 10, 11} corresponding to the third filtered signal may be obtained. A fusion result may be obtained by performing fusion processing on the signal index value sets corresponding to the filtered signals.

It may be understood that, assuming that fusion processing in this application is to take a union set of the signal index value sets, a set of over-threshold sampling point signals S=S1 U S2 U S3={ 1, 2, 3, 4, 5, 6, 7, 8, 9, 10, 11} may be obtained. Herein, this embodiment of this application is described by using an example in which fusion processing is to take a union set of the signal index value sets. Because the set of over-threshold sampling point signals S={ 1, 2, 3, 4, 5, 6, 7, 8, 9, 10, 11} is a non-empty set, it may be determined that an interference signal exists in the radar echo signal.

Optionally, in some feasible implementations, that whether an interference signal exists in the radar echo signal may be determined based on the signal index value set corresponding to each filtered signal may further be understood as that a quantity of non-empty sets is determined from at least two signal index value sets, and further, an interference decision threshold is obtained, to determine, based on the interference decision threshold, the quantity of sets, and a quantity of filters, whether an interference signal exists in the radar echo signal. Specifically, a ratio of the quantity of sets to the quantity of filters may be determined based on the quantity of sets of the non-empty set and the quantity of filters. If the ratio is not less than the interference decision threshold, it is determined that an interference signal exists in the radar echo signal. If the ratio is less than the interference decision threshold, it is determined that no interference signal exists in the radar echo signal.

For example, the at least two filters are a low-pass filter, a band-pass filter, and a high-pass filter, that is, a quantity of filters is 3. It is assumed that a first filtered signal may be obtained by filtering a digital signal by a low-pass filter with a first cut-off frequency, a second filtered signal may be obtained by filtering the digital signal by a band-pass filter with a second cut-off frequency, and a third filtered signal may be obtained by filtering the digital signal by a high-pass filter with a third cut-off frequency. An interference detection threshold determined based on the first filtered signal is a first interference detection threshold, an interference detection threshold determined based on the second filtered signal is a second interference detection threshold, and an interference detection threshold determined based on the third filtered signal is a third interference detection threshold. It may be understood that, it is assumed that signal index values of first sampling points that are determined based on the first interference detection threshold from at least one sampling point signal included in the first filtered signal and that are greater than the first interference detection threshold are 1, 2, 3, 4, and 5 respectively; signal index values of first sampling points that are determined based on the second interference detection threshold from at least one sampling point signal included in the second filtered signal and that are greater than the second interference detection threshold are 6, 7, 8, and 9 respectively; and signal index values of first sampling points that are determined based on the third interference detection threshold from at least one sampling point signal included in the third filtered signal and that are greater than the third interference detection threshold are 10 and 11 respectively. In this case, a first signal index value set S1={1, 2, 3, 4, 5} corresponding to the first filtered signal, a second signal index value set S2={6, 7, 8, 9} corresponding to the second filtered signal, and a third signal index value set S3={ 10, 11} corresponding to the third filtered signal may be obtained. In the foregoing three signal index value sets (that is, the first signal index value set S 1, the second signal index value set S2, and the third signal index value set S3), a quantity of non-empty sets is 3, that is, the foregoing three signal index values are all non-empty sets. Therefore, a ratio of the quantity of non-empty sets to the quantity of filters may be calculated as 1, that is, 3:3=1. Assuming that an obtained interference decision threshold is 0.5, because 1>0.5, that is, the ratio of the quantity of non-empty sets to the quantity of filters is greater than the interference decision threshold, it may be determined that an interference signal exists in the radar echo signal.

In some feasible implementations, if it is determined that an interference signal exists in the radar echo signal, interference cancellation processing may be performed on the radar echo signal. For example, a sampling point signal that is interfered may be determined from the digital signal based on each signal index value included in the set of over-threshold sampling point signals, to perform interference suppression on the sampling point signal that is interfered (for example, set a sampling value to zero, or perform processing like windowing on the sampling point signal). In this embodiment of this application, each sampling point signal corresponding to each signal index value included in the set of over-threshold sampling point signals may be understood as the sampling point signal that is interfered. Optionally, signal reconstruction may be further performed on a sampling point signal on which a suppression operation is performed, to improve a signal-to-noise ratio (signal-to-noise ratio, SNR). For example, signal reconstruction may be performed on a sampling point signal at a location through an interpolation or the like. This is specifically determined based on an actual application scenario, and is not limited herein. Optionally, a one-dimensional fast Fourier transform (fast Fourier transform, FFT) operation may further be performed, along a fast time dimension, on a digital signal obtained by performing interference suppression and signal reconstruction, and then a two-dimensional FFT operation and the like are performed on the digital signal along a slow time dimension, to obtain a range-doppler map. Optionally, an operation like CFAR may be further performed on a signal obtained by performing the foregoing series of processing. This is not limited herein.

Optionally, in some feasible implementations, if it is determined that no interference signal exists in the radar echo signal, a one-dimensional FFT operation may be performed on original ADC data (that is, a digital signal) along a fast time dimension, and then a two-dimensional FFT operation is performed on the original ADC data (that is, the digital signal) along a slow time dimension, to obtain a range-doppler map. Optionally, an operation like incoherent accumulation, parameter estimation, or CFAR may further be performed on the data obtained by performing the two-dimensional FFT operation. This is not limited herein.

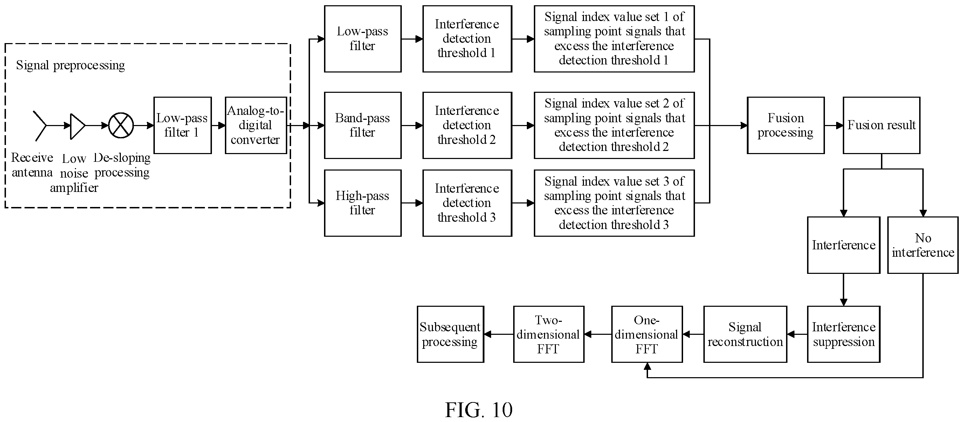

Refer to FIG. 10. FIG. 10 is a schematic diagram of an application scenario of interference detection according to an embodiment of this application. It is assumed that a radar system is a vehicle-mounted millimeter-wave radar system, and a transmit signal is an FMCW. As shown in FIG. 10, after a receive antenna receives a radar echo signal, the radar echo signal passes through a low noise amplifier, a de-sloping processing module, a low-pass filter 1 (herein, the low-pass filter 1 is configured to filter a signal obtained after de-sloping into a baseband bandwidth), and an analog-to-digital converter in sequence, to obtain a digital signal. The digital signal is filtered by multi-level filters, and then is detected separately. Detected effects are fused, and finally a detection result is output. That the digital signal is filtered by multi-level filters may be understood as that the digital signal is input in parallel to the low-pass filter, the band-pass filter, and the high-pass filter shown in FIG. 10 for filtering processing, to separately obtain corresponding filtered signals. An interference detection threshold corresponding to each filtered signal may be calculated based on each filtered signal. Further, the filtered signals of the filters are compared with respective interference detection thresholds (for example, an interference detection threshold 1, an interference detection threshold 2, and an interference detection threshold 3 in FIG. 10), to obtain a set (for example, a signal index value set 1, a signal index value set 2, and a signal index value set 3 in FIG. 10) including over-threshold sampling point signals (that is, the first sampling point signal in this application) included in the filtered signals. A union set of signal index value sets corresponding to the filtered signals is taken to obtain a set of over-threshold sampling point signals, and determine whether the set of over-threshold sampling point signals is an empty set. If the set of over-threshold sampling point signals is a non-empty set, it is determined that interference exists in the radar echo signal. Therefore, signal index values in the set of over-threshold sampling point signals may separately correspond to the digital signal, to perform interference suppression (for example, set a sampling value to zero) on a sampling point signal at a corresponding location in the digital signal, and then perform signal reconstruction on the suppressed sampling point signal. Subsequently, a one-dimensional FFT operation is further performed, along a fast time dimension, on data obtained after signal reconstruction, and then a two-dimensional FFT operation is performed, along a slow time dimension, on the data obtained after signal reconstruction, to obtain a range-doppler map, and then subsequent operations such as incoherent accumulation and parameter estimation are performed. This is not limited herein. Optionally, if the set of over-threshold sampling point signals is an empty set, it is determined that no interference exists in the radar echo signal. Therefore, a one-dimensional FFT operation may be performed on the digital signal along a fast time dimension, then a two-dimensional FFT operation may be performed on the digital signal along a slow time dimension, and then subsequent operations such as incoherent accumulation and parameter estimation may be performed. This is not limited herein.

According to the interference detection method in this embodiment of this application, the digital signal obtained by processing the radar echo signal, and the digital signal is input in parallel to at least two filtered signals for processing, to obtain the at least two filtered signals with different frequency band ranges. Further, interference detection is separately performed on filtered signals based on interference detection thresholds of the filtered signals, and finally, whether an interference signal exists in the radar echo signal is determined based on results of the interference detection of the filtered signals. This improves precision of detecting an interference signal existing in the radar echo signal.

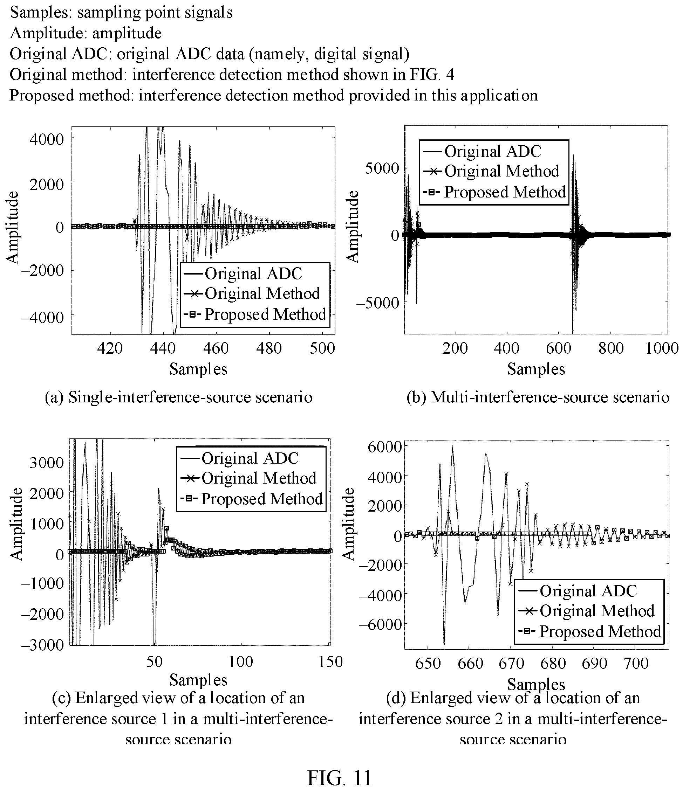

It may be understood that, in the interference detection method provided in this application, after multi-level filtering is performed on a digital signal obtained through preprocessing (that is, the digital signal is input in parallel to at least two filters for filtering), at least two filtered signals with different frequency band ranges are obtained, and interference detection is performed on each filtered signal to implement interference detection on the radar echo signal. This improves interference detection precision. For ease of understanding, the inventor of this application verifies and compares, based on test data, the interference detection method provided in this application with the interference detection method shown in FIG. 4. Refer to FIG. 11. FIG. 11 is a schematic diagram of test results of interference detection methods according to an embodiment of this application. To better present a test effect in the figure, in this embodiment of this application, a detected sample that is interfered is set to zero to present a test result of the interference detection method. Original ADC denotes a digital signal obtained by preprocessing the radar echo signal. Original method denotes the interference detection method shown in FIG. 4. Proposed method denotes the interference detection method provided in this application. As shown in FIG. 11, (a) in FIG. 11 is a schematic diagram of interference suppression effects of different interference detection methods in a single-interference-source scenario, and (b) in FIG. 11 is a schematic diagram of interference suppression effects of different interference detection methods in a multi-interference-source scenario. A plurality of interference sources in (b) in FIG. 11 include an interference source 1 and an interference source 2. In this embodiment of this application, to more clearly show an interference suppression effect of different interference detection methods in a multi-interference-source scenario, (c) in FIG. 11 shows an enlarged view of a location of the interference source 1 in the multi-interference-source scenario, and (d) in FIG. 11 shows an enlarged view of a location of the interference source 2 in the multi-interference-source scenario. It can be learned from (a) in FIG. 11 to (d) in FIG. 11 that, regardless of the single-interference-source scenario or the multi-interference-source scenario, the interference detection method provided in this application is better than the interference detection method shown in FIG. 4. In other words, the interference detection method provided in this application detects more samples that are interfered, and detection precision is higher. In addition, compared with a benefit obtained in the single-interference-source scenario, the method provided in this application in the multi-interference-source scenario obtains more benefits. In other words, the interference detection method provided in this application is more applicable to the multi-interference-source scenario, and has a better detection effect.

The foregoing content describes in detail the methods provided in this application. To facilitate implementation of the foregoing solutions in embodiments of this application, an embodiment of this application further provides a corresponding apparatus or device.

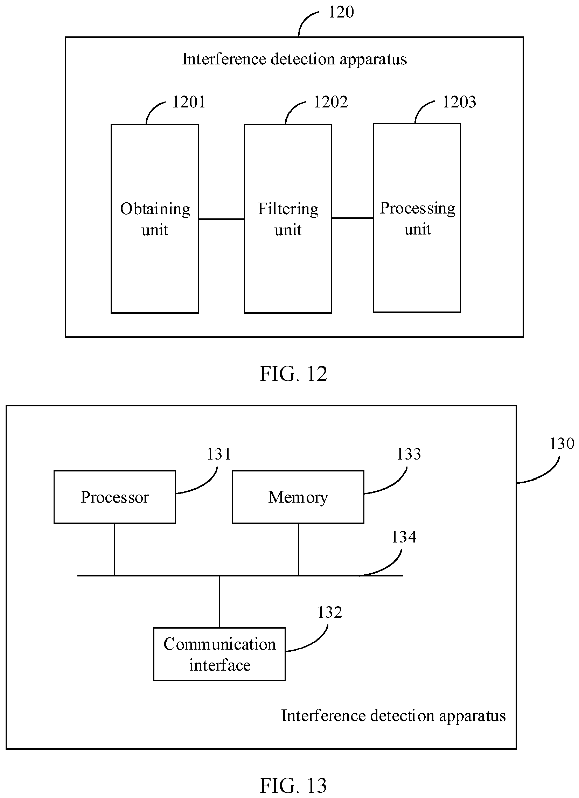

Refer to FIG. 12. FIG. 12 is a schematic diagram of a structure of an interference detection apparatus according to an embodiment of this application. An interference detection apparatus 120 may include an obtaining unit 1201, a filtering unit 1202, and a processing unit 1203. The interference detection apparatus 120 is configured to implement the foregoing interference detection method, for example, may be configured to implement the interference detection method shown in FIG. 6.

It should be noted that for an implementation of each unit, refer to the corresponding description of the method embodiment shown in FIG. 6. The interference detection apparatus 120 may be the interference detection apparatus in the embodiment shown in FIG. 6, or may be one or more modules of the interference detection apparatus.

In a possible implementation, the obtaining unit 1201 is configured to obtain a digital signal obtained by processing a radar echo signal.

The filtering unit 1202 is configured to separately perform filtering processing at different cut-off frequencies on the digital signal, to obtain at least two filtered signals.

The processing unit 1203 is configured to determine, based on each of the at least two filtered signals and an interference detection threshold corresponding to each filtered signal, whether an interference signal exists in the radar echo signal.

The obtaining unit 1201 may be specifically one of or a combination of a receive antenna, a low noise amplifier, a de-sloping processing module, a low-pass filter, an analog-to-digital converter, and the like. The filtering unit 1202 includes at least two filters. The at least two filters may include at least two of a low-pass filter, a band-pass filter, a high-pass filter, a band-stop filter, and the like. This is specifically determined based on an actual application scenario, and is not limited herein. The processing unit 1203 may be specifically one of or a combination of processing modules such as a frequency mixer, a low-pass filter, an analog-to-digital converter, a digital signal processor (digital signal processor, DSP), a central processing unit (central processing unit, CPU), a graphics processing unit (graphics processing unit, GPU), a microprocessor unit (microprocessor unit, MPU), an application-specific integrated circuit (application-specific integrated circuit, ASIC), a field programmable gate array (field programmable gate array, FPGA), a complex programmable logic device (complex programmable logic device, CPLD), a coprocessor (assisting the central processing unit to complete corresponding processing and application), a micro control unit (microcontroller unit, MCU), and a signal processing unit (signal processing unit, SPU).

In still another possible implementation, the at least two filters include at least two of the following filters:
a low-pass filter, a band-pass filter, a high-pass filter, and a band-stop filter.

In still another possible implementation, the at least two filters include a low-pass filter with a first cut-off frequency, a band-pass filter with a second cut-off frequency, and a high-pass filter with a third cut-off frequency. The second cut-off frequency includes an upper limit cut-off frequency and a lower limit cut-off frequency, the lower limit cut-off frequency is not greater than the first cut-off frequency, and the upper limit cut-off frequency is not less than the third cut-off frequency.

In still another possible implementation, each of the at least two filtered signals includes at least one sampling point signal.

The processing unit 1203 is specifically configured to:
determine a signal index value corresponding to a first sampling point signal that is in the at least one sampling point signal included in each filtered signal and that is not less than the interference detection threshold corresponding to each filtered signal; and
determine, based on the signal index value corresponding to the first sampling point signal included in each filtered signal, whether an interference signal exists in the radar echo signal.

In still another possible implementation, the processing unit 1203 is further configured to:
generate, based on the signal index value corresponding to the first sampling point signal included in each filtered signal, a signal index value set corresponding to each filtered signal, where one filtered signal corresponds to one signal index value set; and
determine, based on the signal index value set corresponding to each filtered signal, whether an interference signal exists in the radar echo signal.

In still another possible implementation, the processing unit 1203 is further configured to:
perform fusion processing on signal index value sets corresponding to all filtered signals, to obtain a fusion result; and
determine, based on the fusion result, whether an interference signal exists in the radar echo signal.

In still another possible implementation, the processing unit 1203 is further configured to:
take a union set or an intersection set of the signal index value sets corresponding to all the filtered signals, to obtain a set of over-threshold sampling point signals; and
determine the set of over-threshold sampling point signals as the fusion result.

In still another possible implementation, the processing unit 1203 is further configured to:
if the set of over-threshold sampling point signals is a non-empty set, determine that an interference signal exists in the radar echo signal; or
if the set of over-threshold sampling point signals is an empty set, determine that no interference signal exists in the radar echo signal.

In still another possible implementation, the processing unit 1203 is further configured to:
determine a quantity of non-empty sets from at least two signal index value sets; and
obtain an interference decision threshold, and determine, based on the interference decision threshold, the quantity of sets, and a quantity of filters, whether an interference signal exists in the radar echo signal.

In still another possible implementation, the processing unit 1203 is further configured to:
determine a ratio of the quantity of sets to the quantity of filters; and
if the ratio is not less than the interference decision threshold, determine that an interference signal exists in the radar echo signal; or
if the ratio is less than the interference decision threshold, determine that no interference signal exists in the radar echo signal.

In still another possible implementation, the processing unit 1203 is further configured to:
if determining that an interference signal exists in the radar echo signal, perform interference cancellation processing on the radar echo signal.

It may be understood that, in the apparatus embodiments of this application, division into a plurality of units or modules is merely logical division based on functions, and is not intended to limit a specific structure of the apparatus. In a specific implementation, some functional modules may be subdivided into more small functional modules, and some functional modules may be combined into one functional module. However, no matter whether these functional modules are subdivided or combined, a general procedure performed by the apparatus in a detection process is the same. Generally, each unit corresponds to its own program code (or program instructions). When the program code corresponding to each unit runs on a processor, the unit is controlled by the processor to execute a corresponding procedure, to implement a corresponding function.

Refer to FIG. 13. FIG. 13 is a schematic diagram of a structure of another interference detection apparatus according to an embodiment of this application. As shown in FIG. 13, an interference detection apparatus 130 includes a processor 131, a communication interface 132, and a memory 133. The processor 131, the communication interface 132, and the memory 133 are coupled through a bus 134.

The processor 131 may be one or more central processing units (central processing unit, CPU). When the processor 131 is one CPU, the CPU may be a single-core CPU, or may be a multi-core CPU.

The processor 131 is configured to: read a program stored in the memory, and cooperate with the communication interface 132 to perform some or all of the steps of in the method performed by the interference detection apparatus 130 in the foregoing embodiment of this application.

The memory 133 includes but is not limited to a random access memory (random access memory, RAM), an erasable programmable read-only memory (erasable programmable read-only memory, EPROM), a read-only memory (read-only memory, ROM), a portable read-only memory (compact disc read-only memory, CD-ROM), or the like. The memory 133 is configured to store a program. The processor 131 may read the program stored in the memory 133, to perform the steps in the method shown in FIG. 6 in the foregoing embodiment of this application. Details are not described herein again.

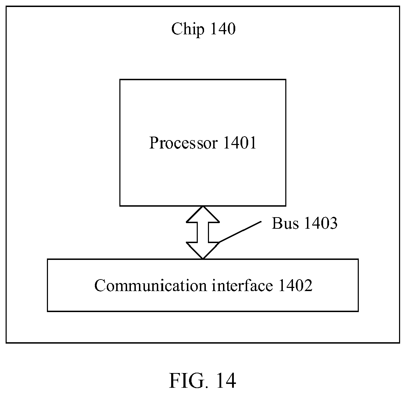

Refer to FIG. 14. FIG. 14 is a schematic diagram of a structure of a chip according to an embodiment of this application. As shown in FIG. 14, a chip 140 may include a processor 1401 and one or more communication interfaces 1402 coupled to the processor 1401.

The processor 1401 may be configured to read and execute computer-readable instructions. In a specific implementation, the processor 1401 may mainly include a controller, an arithmetic unit, and a register. The controller is mainly responsible for decoding instructions and sending a control signal for an operation corresponding to the instructions. The arithmetic unit is mainly responsible for performing a fixed-point or floating-point arithmetic operation, a shift operation, a logic operation, and the like, and may also perform an address operation and address conversion. The register is mainly responsible for saving a quantity of register operations, intermediate operation results, and the like that are temporarily stored during instruction execution. In a specific implementation, a hardware architecture of the processor 1401 may be an application-specific integrated circuit (application-specific integrated circuit, ASIC) architecture, an MIPS architecture, an ARM architecture, an NP architecture, or the like. The processor 1401 may be a single-core or multi-core processor.

The communication interface 1402 may be configured to input to-be-processed data to the processor 1401, and may output a processing result of the processor 1401. For example, the communication interface 1402 may be a general-purpose input/output (general-purpose input/output, GPIO) interface, and may be connected to a plurality of peripheral devices (such as a display (LCD), a camera (camera), and a radio frequency (radio frequency, RF) module). The communication interface 1402 is connected to the processor 1401 through a bus 1403.

In this application, the processor 1401 may be configured to: invoke, from a memory, an implementation program of the interference detection method provided in one or more embodiments of this application, and execute instructions included in the program. The communication interface 1402 may be configured to output an execution result of the processor 1401. In this application, the communication interface 1402 may be specifically configured to output a result of interference detection of the processor 1401. For the interference detection method provided in one or more embodiments of this application, refer to the embodiments shown in FIG. 6. Details are not described herein again.

It should be noted that functions corresponding to each of the processor 1401 and the communication interface 1402 may be implemented by using a hardware design, or may be implemented by using a software design, or may be implemented by using a combination of software and hardware. This is not limited herein.

Based on a same inventive concept, a problem-resolving principle and beneficial effects of the interference detection apparatus provided in this embodiment of this application are similar to a problem-resolving principle and beneficial effects of the interference detection method in the method embodiment of this application. For details, refer to an implementation principle and beneficial effects of the method. In addition, for a relationship between the steps performed by the related modules, refer to the descriptions of related content in the foregoing embodiments. For brevity, details are not described herein again.

An embodiment of this application further provides a computer storage medium, configured to store computer software instructions used by the interference detection apparatus 130 in the embodiment shown in FIG. 13. The computer software instructions include a program designed for executing the interference detection apparatus in the foregoing embodiment. The storage medium includes but is not limited to a flash memory, a hard disk drive, or a solid-state drive.

An embodiment of this application further provides a computer program product. When the computer product is run by an interference detection apparatus, the interference detection method designed for the interference detection apparatus in the embodiment shown in FIG. 13 may be performed.

An embodiment of this application further provides a radar system for providing an interference detection function for a vehicle. The radar system includes at least one interference detection apparatus mentioned in the foregoing embodiments of this application. The at least one interference detection apparatus in the system may be integrated into an entire system or a device, or the at least one interference detection apparatus in the system may be independently disposed as an element or an apparatus.

An embodiment of this application further provides a sensor system for providing an interference detection function for a vehicle. The sensor system includes at least one interference detection apparatus mentioned in the foregoing embodiments of this application and at least one another sensor like a camera or a radar. At least one sensor apparatus in the system may be integrated into an entire system or a device, or at least one sensor apparatus in the system may be independently disposed as an element or an apparatus.

An embodiment of this application further provides a system, applied to unmanned driving or intelligent driving. The system includes at least one of the interference detection apparatus mentioned in the foregoing embodiments of this application and other sensors such as a camera and a radar. At least one apparatus in the system may be integrated into an entire system or a device, or at least one apparatus in the system may be independently disposed as an element or an apparatus.

Further, any of the above systems may interact with a central controller of the vehicle to provide detection and/or fusion information for decision or control of driving of the vehicle.

An embodiment of this application further provides a terminal. The terminal includes at least one interference detection apparatus mentioned in the foregoing embodiments of this application or any one of the foregoing systems. For example, the terminal may include a vehicle, a camera, an uncrewed aerial vehicle, a signal light, a speed measurement apparatus, and the like. This is not limited herein.

It may be understood that, a sequence of the steps in method embodiments of this application may be adjusted, combined, or deleted based on an actual requirement.

Combination, division, and deletion may be performed on the modules in the apparatus embodiments of this application based on an actual requirement.

Persons of ordinary skill in the art may understand that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

## Claims

1. An interference detection method, wherein the method comprises:
obtaining a digital signal obtained by processing a radar echo signal;
processing the digital signal via at least two filters separately with different cut-off frequencies to obtain at least two filtered signals; and
determining, based on each of the at least two filtered signals and an interference detection threshold corresponding to each filtered signal, whether an interference signal exists in the radar echo signal.

2. The method according to claim 1, wherein the at least two filters comprise at least two of the following filters:
a low-pass filter, a band-pass filter, a high-pass filter, and a band-stop filter.

3. The method according to claim 1 or 2, wherein the at least two filters comprise a low-pass filter with a first cut-off frequency, a band-pass filter with a second cut-off frequency, and a high-pass filter with a third cut-off frequency; the second cut-off frequency comprises an upper limit cut-off frequency and a lower limit cut-off frequency; and the lower limit cut-off frequency is not greater than the first cut-off frequency, and the upper limit cut-off frequency is not less than the third cut-off frequency.

4. The method according to any one of claims 1 to 3, wherein each of the at least two filtered signals comprises at least one sampling point signal; and
the determining, based on each of the at least two filtered signals and an interference detection threshold corresponding to each filtered signal, whether an interference signal exists in the radar echo signal comprises:
determining a signal index value corresponding to a first sampling point signal that is in the at least one sampling point signal comprised in each filtered signal and that is not less than the interference detection threshold corresponding to each filtered signal; and
determining, based on the signal index value corresponding to the first sampling point signal comprised in each filtered signal, whether an interference signal exists in the radar echo signal.

5. The method according to claim 4, wherein the determining, based on the signal index value corresponding to the first sampling point signal comprised in each filtered signal, whether an interference signal exists in the radar echo signal comprises:
generating, based on the signal index value corresponding to the first sampling point signal comprised in each filtered signal, a signal index value set corresponding to each filtered signal, wherein one filtered signal corresponds to one signal index value set; and
determining, based on the signal index value set corresponding to each filtered signal, whether an interference signal exists in the radar echo signal.

6. The method according to claim 5, wherein the determining, based on the signal index value set corresponding to each filtered signal, whether an interference signal exists in the radar echo signal comprises:
performing fusion processing on signal index value sets corresponding to all filtered signals, to obtain a fusion result; and
determining, based on the fusion result, whether an interference signal exists in the radar echo signal.

7. The method according to claim 6, wherein the performing fusion processing on signal index value sets corresponding to all filtered signals, to obtain a fusion result comprises:
taking a union set or an intersection set of the signal index value sets corresponding to all the filtered signals, to obtain a set of over-threshold sampling point signals; and
determining the set of over-threshold sampling point signals as the fusion result.

8. The method according to claim 7, wherein the determining, based on the fusion result, whether an interference signal exists in the radar echo signal comprises:
if the set of over-threshold sampling point signals is a non-empty set, determining that an interference signal exists in the radar echo signal; or
if the set of over-threshold sampling point signals is an empty set, determining that no interference signal exists in the radar echo signal.

9. The method according to claim 5, wherein the determining, based on the signal index value set corresponding to each filtered signal, whether an interference signal exists in the radar echo signal comprises:
determining a quantity of non-empty sets from at least two signal index value sets; and
obtaining an interference decision threshold, and determining, based on the interference decision threshold, the quantity of sets, and a quantity of filters, whether an interference signal exists in the radar echo signal.

10. The method according to claim 9, wherein the determining, based on the interference decision threshold, the quantity of sets, and a quantity of filters, whether an interference signal exists in the radar echo signal comprises:
determining a ratio of the quantity of sets to the quantity of filters; and
if the ratio is not less than the interference decision threshold, determining that an interference signal exists in the radar echo signal; or
if the ratio is less than the interference decision threshold, determining that no interference signal exists in the radar echo signal.

11. The method according to any one of claims 1 to 10, wherein after the determining, based on each filtered signal and an interference detection threshold corresponding to each filtered signal, whether an interference signal exists in the radar echo signal, the method further comprises:
if determining that an interference signal exists in the radar echo signal, performing interference cancellation processing on the radar echo signal.

12. An interference detection apparatus, wherein the apparatus comprises:
an obtaining unit, configured to obtain a digital signal obtained by processing a radar echo signal;
a filtering unit, configured to separately perform filtering processing at different cut-off frequencies on the digital signal, to obtain at least two filtered signals; and
a processing unit, configured to determine, based on each of the at least two filtered signals and an interference detection threshold corresponding to each filtered signal, whether an interference signal exists in the radar echo signal.

13. The apparatus according to claim 12, wherein at least two filters comprise at least two of the following filters:
a low-pass filter, a band-pass filter, a high-pass filter, and a band-stop filter.

14. The apparatus according to claim 12 or 13, wherein the at least two filters comprise a low-pass filter with a first cut-off frequency, a band-pass filter with a second cut-off frequency, and a high-pass filter with a third cut-off frequency; the second cut-off frequency comprises an upper limit cut-off frequency and a lower limit cut-off frequency; and the lower limit cut-off frequency is not greater than the first cut-off frequency, and the upper limit cut-off frequency is not less than the third cut-off frequency.

15. The apparatus according to any one of claims 12 to 14, wherein each of the at least two filtered signals comprises at least one sampling point signal; and
the processing unit is specifically configured to:
determine a signal index value corresponding to a first sampling point signal that is in the at least one sampling point signal comprised in each filtered signal and that is not less than the interference detection threshold corresponding to each filtered signal; and
determine, based on the signal index value corresponding to the first sampling point signal comprised in each filtered signal, whether an interference signal exists in the radar echo signal.

16. The apparatus according to claim 15, wherein the processing unit is further specifically configured to:
generate, based on the signal index value corresponding to the first sampling point signal comprised in each filtered signal, a signal index value set corresponding to each filtered signal, wherein one filtered signal corresponds to one signal index value set; and
determine, based on the signal index value set corresponding to each filtered signal, whether an interference signal exists in the radar echo signal.

17. The apparatus according to claim 16, wherein the processing unit is further specifically configured to:
perform fusion processing on signal index value sets corresponding to all filtered signals, to obtain a fusion result; and
determine, based on the fusion result, whether an interference signal exists in the radar echo signal.

18. The apparatus according to claim 17, wherein the processing unit is further specifically configured to:
take a union set or an intersection set of the signal index value sets corresponding to all the filtered signals, to obtain a set of over-threshold sampling point signals; and
determine the set of over-threshold sampling point signals as the fusion result.

19. The apparatus according to claim 18, wherein the processing unit is further specifically configured to:
if the set of over-threshold sampling point signals is a non-empty set, determine that an interference signal exists in the radar echo signal; or
if the set of over-threshold sampling point signals is an empty set, determine that no interference signal exists in the radar echo signal.

20. The apparatus according to claim 16, wherein the processing unit is further specifically configured to:
determine a quantity of non-empty sets from at least two signal index value sets; and
obtain an interference decision threshold, and determine, based on the interference decision threshold, the quantity of sets, and a quantity of filters, whether an interference signal exists in the radar echo signal.

21. The apparatus according to claim 20, wherein the processing unit is further specifically configured to:
determine a ratio of the quantity of sets to the quantity of filters; and
if the ratio is not less than the interference decision threshold, determine that an interference signal exists in the radar echo signal; or
if the ratio is less than the interference decision threshold, determine that no interference signal exists in the radar echo signal.

22. The apparatus according to any one of claims 12 to 21, wherein the processing unit is further specifically configured to:
if determining that an interference signal exists in the radar echo signal, perform interference cancellation processing on the radar echo signal.

23. A detection apparatus, comprising a processor and a memory, wherein the memory is configured to store one or more programs, the one or more programs comprise computer-executable instructions, and when the apparatus runs, the processor executes the one or more programs stored in the memory, so that the apparatus performs the method according to any one of claims 1 to 11.

24. A computer storage medium, wherein the computer storage medium stores a computer program, and when the computer program is run on a computer, the computer is enabled to perform the method according to any one of claims 1 to 11.

25. A chip, wherein the chip comprises:
a processor and a communication interface, wherein the processor is configured to invoke instructions from the communication interface and run the instructions, and when the processor executes the instructions, the method according to any one of claims 1 to 11 is implemented.

26. A terminal, wherein the terminal comprises the apparatus according to any one of claims 12 to 23.
